Europäisches Patentamt

European Patent Office

Office européen des brevets

(19)

(11) **EP 1 165 997 B1**

(12) **FASCICULE DE BREVET EUROPEEN**

(45) Date de publication et mention
de la délivrance du brevet:
**16.06.2004 Bulletin 2004/25**

(21) Numéro de dépôt: **01903864.5**

(22) Date de dépôt: **03.01.2001**

(51) Int Cl.⁷: $F16L\ 9/18$

(86) Numéro de dépôt international:
**PCT/FR2001/000019**

(87) Numéro de publication internationale:
**WO 2001/055630 (02.08.2001 Gazette 2001/31)**

(54) **DISPOSITIF DE CLOISON RADIALE, NOTAMMENT LIMITEUR DE PROPAGATION D'UNE DEFORMATION RADIALE DANS UNE CONDUITE A DOUBLE PAROI DESTINE AUX GRANDES PROFONDEURS**

RADIALE TRENNWAND, INSBESONDERE FÜR DIE BEGRENZUNG DER VERBREITUNG EINER RADIALEN DEFORMATION IN EINER DOPPELWANDIGEN ROHRLEITUNG IN GROSSER TIEFE

RADIAL PARTITION DEVICE, IN PARTICULAR RADIAL BUCKLE ARRESTOR FOR A DOUBLE-WALLED DEEP WATER PIPELINE

(84) Etats contractants désignés:
**AT BE CH CY DE DK ES FI FR GB GR IE IT LI LU MC NL PT SE TR**

(30) Priorité: **24.01.2000 FR 0000849**

(43) Date de publication de la demande:
**02.01.2002 Bulletin 2002/01**

(73) Titulaire: **TECHNIP FRANCE**
**92400 Courbevoie (FR)**

(72) Inventeurs:
• **LOUIS, Bill, George**
  **Houston, TX 77057 (US)**

• **BELL, Mike**
  **Aberdeen (GB)**

(74) Mandataire: **Bertrand, Didier et al**
**Cabinet FEDIT-LORIOT**
**38, Avenue Hoche**
**75008 Paris (FR)**

(56) Documents cités:
**WO-A-99/34141**      **US-A- 4 786 088**
**US-A- 5 141 260**     **US-A- 5 400 828**

**Description**

La présente invention concerne un dispositif de cloison radiale, notamment pour limiter ou arrêter la propagation d'une déformation radiale dans une conduite à double enveloppe constituée de deux tubes coaxiaux métalliques respectivement intérieur et extérieur, séparés par un espace annulaire, cette conduite étant une conduite rigide de transport de fluides tels que des hydrocarbures, destinée à des très grandes profondeurs.

La pose d'un tube ou conduite rigide sur un fond marin est effectuée le plus souvent à partir d'un navire dit de pose. La pose est dite en S lorsque le tube affecte la forme d'un S entre le navire de pose et le fond marin et elle est dite en J lorsque le tube affecte la forme d'un J. Dans ce dernier cas, une rampe de guidage est prévue sur le navire de pose, laquelle rampe peut être parfois immergée partiellement dans l'eau.

Le tube rigide à poser est stocké sur le navire de pose soit en tronçons de tube de longueur donnée mais relativement courte, les tronçons de tube étant reliés ensemble au fur et à mesure de la pose, soit enroulé en grande longueur sur une bobine, le tube étant alors déroulé de ladite bobine pendant l'opération de pose. Ces opérations de pose sont décrites dans le document API (American Petroleum Institute) Recommended Practice 17 A de 1987.

Lorsque le tube a quitté le navire et lors de la pose dudit tube, il est important que ce dernier ne subisse pas de déformation plastique en flexion qui entraînerait une ovalisation du tube, laquelle ovalisation provoquant un "point singulier faible" qui favoriserait l'initiation d'un écrasement ("collapse" en anglais). Par ailleurs, lorsque le tube est posé sur un fond marin à des profondeurs importantes d'eau (typiquement supérieures à 300 m et pouvant atteindre 2000 m et davantage), la pression hydrostatique s'exerçant sur le tube peut être suffisante pour initier une déformation radiale qui a tendance à se propager en vague le long du tube, dans les deux directions. Bien entendu, la formation de la déformation se fera, en priorité sur un "point singulier faible" lorsqu'il existe sur le tube. Lorsque la déformation se produit, il est alors nécessaire de remplacer au moins la section ou partie du tube comportant la zone déformée ou écrasée. La pression de propagation de la déformation est donnée par la formule :

$$26 \times \sigma_0 \times (T/D)^{2.5}$$

où $\sigma_0$ est la limite élastique de l'acier, T est l'épaisseur de la conduite et D est le diamètre externe de la conduite. Pour résister à la propagation d'une déformation, il faut que la pression correspondante soit supérieure à la pression hydrostatique.

Pour éviter la propagation de la ou des déformations locales, il a été proposé de doter le tube de certains dispositifs ou organes, dénommés des limiteurs de déformation ("buckle arrestor" en anglais). L'API Recommended Practice 1111 donne diverses recommandations et formules qui indiquent à partir de quelle profondeur les limiteurs sont recommandés, nécessaires ou strictement indispensables.

De tels dispositifs ont d'abord été proposés dans le cadre des conduites rigides à simple enveloppe.

Selon une première solution, on dispose un cylindre à l'intérieur de la conduite. Ainsi, dans US 3 747 356, il est proposé de relier un cylindre à un câble, de loger le cylindre à l'intérieur d'une section de tube puis de dérouler en même temps le tube et le câble, de manière à maintenir le cylindre dans la section de tube pendant la pose de cette dernière jusqu'au contact du tube avec le fond marin. Puis on remonte le cylindre pour le loger dans une autre section de tube à poser et qui est reliée à la précédente. De ce fait, toute déformation susceptible de se produire, pendant la pose du tube, entre le navire de pose et le fond marin est immédiatement arrêtée et n'est donc pas autorisée à. se propager le long des sections du tube. Toutefois, une telle proposition ne présente aucune solution ou efficacité pour arrêter les déformations susceptibles de se propager après la pose définitive du tube sur le fond marin.

Selon une deuxième solution, on utilise une bague de renfort (éventuellement en deux parties, constituant un "clamp") intérieure ou de préférence extérieure. Ainsi, dans US 3 768 269, il est proposé d'augmenter localement la rigidité du tube en disposant, à intervalles réguliers par exemple à des intervalles compris entre 100 m et 500 m. des bagues de renfort dont la longueur est comprise entre 1m et 2,5 m. Une telle solution n'est valable que pour des tubes posés par sections car les bagues de renfort peuvent être montées et fixées en usine sur les sections de tube, puis transportées par le navire de pose jusqu'au lieu de pose. Lorsque le tube est de grande longueur et enroulé sur une bobine de stockage, il devient alors pratiquement impossible d'enrouler le tube avec ses bagues de renfort sur une bobine car elles induiraient des parties rectilignes ou sensiblement rectilignes et non déformables dans l'enroulement du tube sur la bobine de stockage. Pour pallier cette difficulté, il est possible d'envisager de monter et fixer les bagues de renfort pendant les opérations de pose. Mais alors cela nécessiterait d'interrompre la pose, à intervalles réguliers, afin de monter et fixer les bagues de renfort. Selon une solution alternative connue par ce même brevet ou par les documents GB 1383527 ou US 5458441, le renforcement localisé peut prendre la forme d'un manchon intermédiaire de plus forte épaisseur soudé aux extrémités de la conduite.

Selon une troisième solution, on utilise une tige spiralée sur la paroi externe du tube. Ainsi, pour permettre l'enroulement du tube sur une bobine, le document US 4 364 692 propose d'enrouler une tige autour du tube, de manière serrée, de façon à former un certain nombre de spires qui peuvent être soudées par leurs

Suivant une autre forme de réalisation, les spires peuvent être individuelles en soudant les deux extrémités et en les espaçant régulièrement sur la partie du tube à renforcer. Tant que le tube est simple, l'accroissement du diamètre dans les parties renforcées peut être acceptable. Mais, lorsque le tube est du type à double enveloppe. ("pipe in pipe" en anglais) c'est-à-dire comprenant un tube externe ("liner pipe" en anglais) qui est enfilé sur le tube interne, l'accroissement du diamètre du tube externe est inacceptable pour le transport et le stockage de grandes longueurs de tubes à double enveloppe.

De plus, lorsque le tube rigide à poser est fabriqué en grande longueur à terre puis enroulé sur une bobine sur le navire de pose, les solutions préconisées dans les documents cités ci-dessus ne sont pas appropriées car elles utilisent soit des bagues de renfort de grande longueur, de l'ordre de 1 à 2.5 m. comme dans US 3 768 209, soit un enroulement d'une tige de renfort autour du tube rigide comme dans US 4 364 692.

Dans le but de résoudre ces problèmes et d'obtenir des conduites à double enveloppe enroulables malgré les limiteurs de propagation, la Demanderesse a déjà proposé des dispositifs particuliers.

Selon la demande FR 99 08540, une portion de flexible est soudée sur la paroi interne du tube externe pour constituer un limiteur de propagation flexible.

Selon la demande FR 99 15216, le limiteur de propagation est constitué par un compartiment annulaire rempli de résine injectée avant ou pendant la pose et qui peut n'être durcie qu'après la pose si la longueur du compartiment de la résine est trop grande pour permettre l'enroulement à l'état durci.

On connaît dans le domaine des conduites à doubles enveloppes métalliques des dispositifs de natures diverses disposés entre les tubes coaxiaux intérieur et extérieur, qui ne sont pas destinés à limiter la propagation d'une déformation, mais plutôt à former des compartiments, à servir d'entretoise, ou à réunir plusieurs tronçons de conduite. Par exemple, des systèmes de bouchage d'extrémité ("bulkheads" en anglais) de tube rigide à double paroi existent et sont décrits notamment dans les documents WO 96/36831 et WO 98/17940. De tels bouchons d'extrémité ne sont pas assimilables à des limiteurs de propagation car la matière élastique dans laquelle ils sont réalisés n'est pas apte à transférer les contraintes appliquées au tube externe sur le tube interne.

On connaît aussi dans un domaine très différent, celui des canalisations à double enveloppe en matière thermoplastique, par exemple par les documents US 5 141 260 et US 4 786 088, des dispositifs d'entretoise à cloison radiale entre les deux enveloppes qui permettent d'éviter les problèmes liés à la dilatation différentielle des deux enveloppes, laquelle peut engendrer des déformations axiales que ces dispositifs d'entretoise peuvent contenir. Ces canalisations ne sont pas destinées à être immergées ni à subir une pression environnante de nature à induire des phénomènes de déformation radiale. Ces canalisations ne sont pas non plus destinées à être enroulées.

Il ressort de cet état de la technique qu'il est connu, notamment grâce à la Demanderesse, d'avoir des dispositifs limiteurs de propagation sur des conduites à double enveloppe métallique qui restent enroulables, mais au prix d'une certaine complication de structure et donc d'une augmentation des coûts.

Le but de l'invention est de proposer un dispositif à cloison radiale pour conduite enroulable à double enveloppe qui soit très simple à fabriquer et à monter.

Le but de l'invention est atteint grâce à un dispositif à cloison radiale pour une conduite ou tube rigide de transport d'hydrocarbures à double enveloppe constituée de deux tubes coaxiaux métalliques respectivement intérieur et extérieur séparés par un espace annulaire, cette conduite étant destinée à des très grandes profondeurs, caractérisé en ce qu'il est constitué par une cloison transversale annulaire épaisse et rigide reliant un manchon extérieur et un manchon intérieur métalliques de même diamètre respectivement que le dit tube extérieur et ledit tube intérieur, agencés pour être soudés respectivement au tube intérieur et au tube extérieur, une liaison par vissage étant prévue entre le manchon intérieur et le manchon extérieur.

Avantageusement le manchon intérieur est décalé axialement par rapport au manchon extérieur (c'est-à-dire le manchon intérieur dépasse du manchon extérieur d'un côté et est en retrait de l'autre), de manière à faciliter la pose par soudure en limitant le nombre de soudures. Ce dispositif de cloisonnement est particulièrement intéressant pour les conduites rigides non déroulées assemblées en mer, car il réduit le temps de fabrication. Il permet de s'affranchir des pièces intermédiaires qui sont nécessaires pour un dispositif à cloison en une seule pièce ou en deux pièces soudées, et a aussi l'avantage d'autoriser un ajustage facile de la position du tube externe par rapport au tube interne, permettant de s'affranchir des jeux de fabrication.

Le dispositif de l'invention peut servir de limiteur de propagation. Cette solution est d'autant plus surprenante qu'elle est particulièrement simple mais qu'on n'y avait jamais songé malgré le besoin constant de l'industrie pétrolière, besoin d'autant plus pressant que l'exploitation dans des eaux de plus en plus profondes rend les limiteurs de propagation absolument indispensables.

Une cloison transversale annulaire épaisse et rigide est déjà connue en soi depuis très longtemps, par exemple par le document US 3768269 déjà cité, mais il ne s'agissait que d'un anneau extérieur au tube simple et qui donc s'opposait à l'enroulement du tube.

L'épaisseur de la cloison selon l'invention est typiquement inférieure à 0,5 fois le diamètre extérieur de la conduite, contrairement aux limiteurs pour conduite à double enveloppe connus jusque-là. L'épaisseur est même de préférence inférieure à 0,2 fois ledit diamètre extérieur.

La solidarisation de la cloison et/ou du manchon aux tubes peut se faire par soudage, collage ou vissage, en plus de la liaison par vissage déjà prévue.

Lors de l'enroulement sur la bobine, le tube intérieur sera soumis à une contrainte locale très importante au niveau de la cloison. Ce phénomène qui pourrait éventuellement entraîner la création de fissures dans le tube interne peut être combattu en augmentant graduellement et localement l'épaisseur du tube intérieur dans la zone prévue pour la cloison.

La conduite conforme à l'invention peut s'utiliser à des grandes profondeurs, sans autres formes de limiteurs de propagation que ceux-là, et sans autre modification de la conduite (telle qu'un renforcement de l'épaisseur du tube extérieur).

D'autres avantages et caractéristiques apparaîtront plus clairement à la lecture de la description suivante de l'invention, se référant aux dessins annexés sur lesquels :

- la figure 1 est une vue en coupe longitudinale d'une partie d'un tronçon rigide à double enveloppe équipé d'un dispositif conforme à l'invention ;
- les figures 2, 3, et 4 représentent schématiquement en coupe trois phases de montage du dispositif de l'invention lors de la fabrication de la conduite ;
- les figures 5 et 6 représentent en coupe longitudinale deux autres modes de réalisation du dispositif de l'invention.

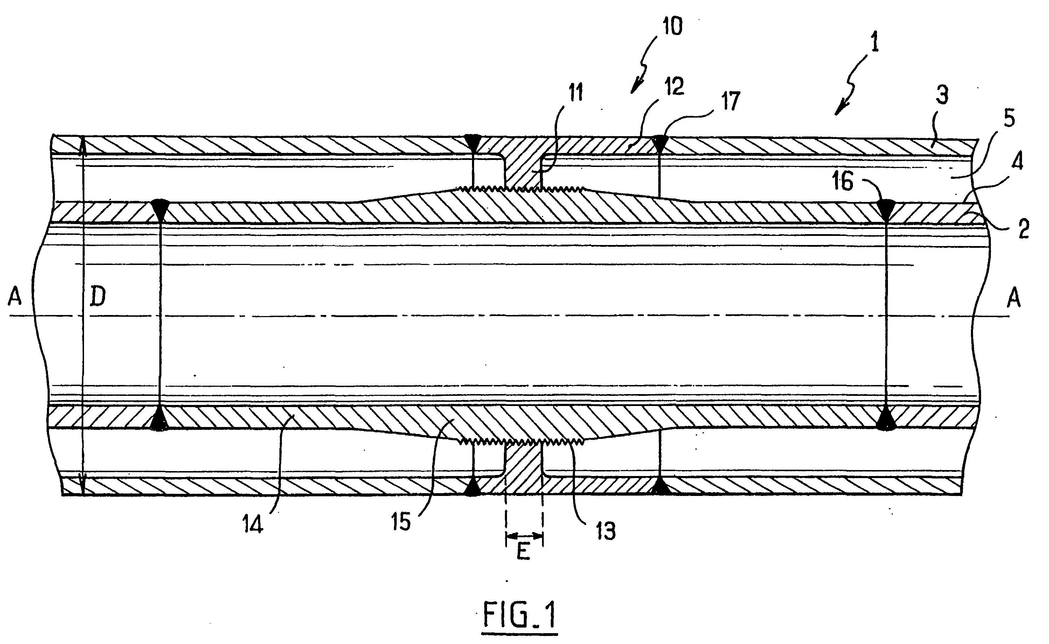

Le tube rigide à double enveloppe 1 d'axe longitudinal A, représenté partiellement sur la figure 1, comprend une enveloppe intérieure ("flow pipe" en anglais) ou tube intérieur 2 dont le diamètre et la nature du matériau sont choisis en fonction du fluide circulant dans ledit tube intérieur, notamment en fonction de la température et de la pression dudit fluide, et une enveloppe extérieure ou tube extérieur 3 ("carrier pipe" en anglais) qui est enfilé sur le tube intérieur 2. Le tube extérieur 3 présente généralement un diamètre extérieur D qui est surdimensionné par rapport au tube intérieur 2 pour permettre la mise en place d'un isolant thermique dans l'espace annulaire 5 et représente une épaisseur qui permet de résister à la pression hydrostatique qui s'exerce sur ledit tube extérieur 3. Le tube rigide 1 comprend généralement des entretoises ou écarteurs, non représentés, ("spacers" en anglais) qui sont solidaires de la paroi externe 4 du tube intérieur 2 et qui sont logés dans l'espace annulaire 5 ménagé entre les tubes extérieur 3 et intérieur 2.

Le dispositif limiteur de propagation 10 comprend essentiellement une cloison annulaire 11 solidarisée aux tubes 2 et 3. L'épaisseur E de la cloison est assez faible par rapport au diamètre D, par exemple de l'ordre de 1/10 à 2/10 de D. Dans un mode de réalisation, E = 30 mm et D = 270 mm.

La cloison 11 est d'une pièce avec un manchon extérieur court, sensiblement de mêmes épaisseur et diamètre que le tube extérieur 3. La cloison 11 est vissée sur un filetage extérieur 13 d'un manchon intérieur 14 sensiblement de mêmes épaisseur et diamètre que le tube intérieur 2. Cependant, le filetage 13 est prévu au milieu d'une zone 15 du manchon dont l'épaisseur est graduellement augmentée vers l'extérieur et vers le milieu. Les manchons 12 et 14 sont solidarisés par des soudures 16 et 17 aux tubes intérieurs 2 et extérieurs 3. Le filetage 13 est avantageusement un filetage de type ACME (filetage trapézoïdal) couramment utilisé dans le milieu pétrolier pour raccorder des tronçons de conduite et permettant de bien transmettre les efforts. Le filetage 13 peut se situer sur une partie quelconque de la cloison 11. pas nécessairement à son raccordement avec l'un ou l'autre des manchons.

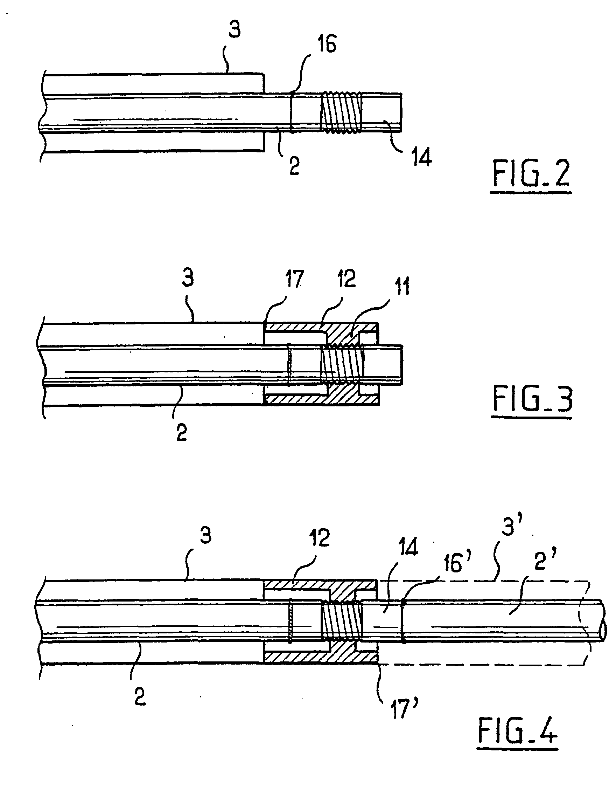

De préférence, le manchon intérieur 14 et le manchon extérieur 12 sont décalés axialement (par exemple de 100 mm) pour faciliter le montage qui va maintenant être expliqué sur les figures 2 à 4. La conduite à double enveloppe est fabriquée de manière connue par aboutement de tronçon d'une certaine longueur (par exemple 12 m). Quand il faut interposer un limiteur, environ tous les 200 m de conduite, on commence par souder en 16 le manchon intérieur fileté 14 sur le tube intérieur 2 (figure 2) ; on y visse l'ensemble constitué par la cloison 11 et le manchon extérieur 12 et on vient réaliser la soudure 17 du manchon extérieur 12 sur le tube extérieur 3. Le manchon extérieur 12 étant décalé par rapport au manchon intérieur 14, il n'est pas nécessaire d'utiliser un tube intermédiaire (deux demi-coques) pour relier le manchon extérieur 14 au tube extérieur 3. On comprend bien que lorsque le dispositif est constitué d'une seule pièce ou de plusieurs pièces soudées, un tube intermédiaire sera nécessaire, le manchon externe 12 étant plus court que le manchon interne 14 pour permettre le soudage de manchon interne 14 sur le tube intérieur 2. De plus, le dispositif vissé permet d'ajuster au mieux la position du manchon extérieur 14 par rapport au tube extérieur et permet donc de reprendre les éventuels jeux de fabrication. La cloison peut aussi être soudée au niveau du filetage pour assurer l'étanchéité, cette soudure n'ayant pas besoin de reprendre les efforts et étant donc simple à réaliser. On vient ensuite tirer le tube intérieur 2' d'un nouveau tronçon de conduite, en le dégageant du tube extérieur, d'une longueur suffisante pour permettre de le souder en 16' sur le manchon intérieur 14 du limiteur installé (figure 4), puis on viendra tirer le tube extérieur 3'(représenté en pointillés) du nouveau tronçon sur le tube intérieur 2' juste soudé pour permettre de venir le souder en 17' sur le manchon extérieur 14 et on peut poursuivre la fabrication classique de plusieurs tronçons de conduite jusqu'à la mise en place du prochain limiteur de propagation.

Le limiteur précédemment décrit est réalisé intégralement en acier (éventuellement dans des nuances différentes pour le manchon intérieur et pour le manchon extérieur) et peut constituer un pont thermique entre l'environnement externe de la conduite double et le tube intérieur. Au droit de chaque limiteur, ce pont thermique peut créer un point froid qui entraîne la formation de paraffine. Pour éviter ce problème, on peut créer un isolant thermique à base de céramique entre les parties isolées de la conduite doubles.

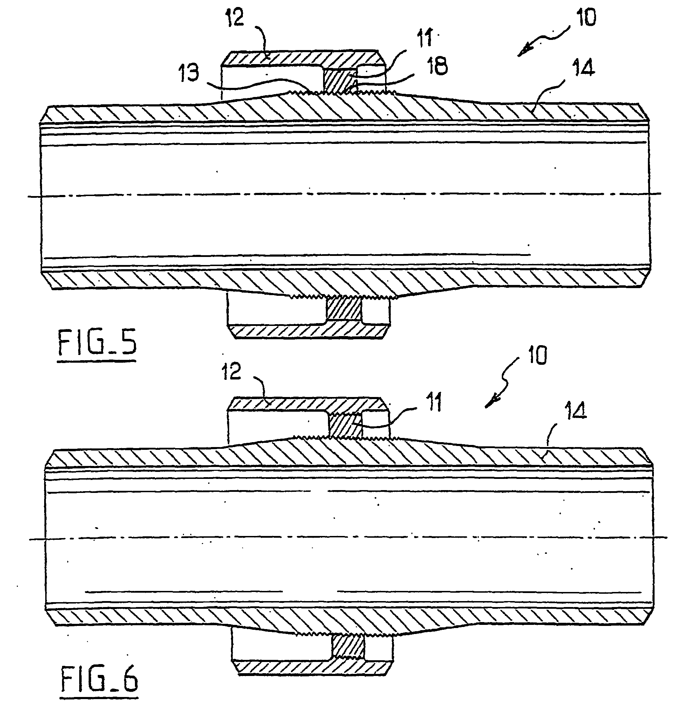

A cet effet, la cloison 11 (figures 5 et 6) peut être réalisée en céramique et les manchons 12 et 14 en acier. La cloison peut être collée sur les tubes avec une colle anaérobie qui assure l'étanchéité. Dans le mode de réalisation de la figure 5, on a conservé un filetage d'acier 18 coopérant avec le filetage 13 du manchon intérieur 14, alors que dans le mode de réalisation de la figure 6, le limiteur 10 est réalisé de façon monobloc par collage direct de la cloison 11 sur les manchons 12 et 14. La conductivité thermique de la céramique doit être inférieure à 0,5 W/K.mn et de préférence inférieure à 0,2 W/K.m.

## Revendications

1. Dispositif (10) à cloison radiale (11) pour une conduite (1) ou tube rigide de transport d'hydrocarbures à double enveloppe constituée de deux tubes coaxiaux métalliques respectivement intérieur (2) et extérieur (3) séparés par un espace annulaire (5), cette conduite (1) étant destinée à des très grandes profondeurs, **caractérisé en ce qu'**il est constitué par une cloison transversale annulaire épaisse et rigide (11) reliant un manchon extérieur (12) et un manchon intérieur (14) métalliques de même diamètre respectivement que ledit tube extérieur (3) et ledit tube intérieur (2), agencés pour être soudés respectivement au tube intérieur (2) et au tube extérieur (3), une liaison par vissage (13) étant prévue entre le manchon intérieur (14) et le manchon extérieur (12).

2. Dispositif selon la revendication 1, **caractérisé en ce que** le manchon intérieur (14) est décalé axialement par rapport au manchon extérieur (12).

3. Dispositif selon l'une quelconque des revendications 1 ou 2, **caractérisé en ce que** l'épaisseur E de la cloison (11) est inférieure à 0,5 fois le diamètre extérieur D du tube extérieur et de préférence inférieur à 0,2 fois ce diamètre.

4. Dispositif selon l'une quelconque des revendications précédentes, **caractérisé en ce que** la cloison (11) est solidarisée au tube intérieur ou au manchon intérieur dans une zone (15) de celui-ci d'épaisseur graduellement renforcée vers l'extérieur.

5. Dispositif selon l'une quelconque des revendications précédentes, **caractérisé en ce que** la cloison (11) est solidarisée à l'un au moins des tubes intérieur (2) ou extérieur (3) ou aux manchons intérieur ( 14) ou extérieur (12) par soudage, collage ou vissage.

6. Dispositif selon l'une quelconque des revendications précédentes, **caractérisé en ce que** la cloison (11) est réalisée dans une matière mécaniquement résistante et thermiquement peu conductrice, telle qu'une céramique.

## Patentansprüche

1. Vorrichtung (10) mit radialer Trennwand (11) für eine doppelwandige Leitung ( 1 ) bzw. ein starres Rohr zum Transport von Kohlenwasserstoffverbindungen, bestehend aus zwei koaxialen Metallrohren, einem inneren (2) und einem äußeren (3), die durch einen ringförmigen Zwischenraum (5) voneinander getrennt sind, wobei diese Leitung (1) für sehr große Tiefen bestimmt ist,
   **dadurch gekennzeichnet,**
   **dass** sie von einer dicken und starren, ringförmigen, quer verlaufenden Trennwand (11) gebildet wird, die eine Außenhülse (12) aus Metall und eine Innenhülse (14) aus Metall miteinander verbindet, welche den gleichen Durchmesser wie das genannte äußere Rohr (3) bzw. das genannte innere Rohr (2) aufweisen und geeignet sind, an das innere Rohr (2) bzw. an das äußere Rohr (3) angeschweißt zu werden, wobei zwischen der Innenhülse (14) und der Außenhülse (12) eine Schraubverbindung (13) vorgesehen ist.

2. Vorrichtung nach Anspruch 1,
   **dadurch gekennzeichnet,**
   **dass** die Innenhülse (14) zur Außenhülse (12) axial verschoben ist.

3. Vorrichtung nach einem der Ansprüche 1 oder 2,
   **dadurch gekennzeichnet,**
   **dass** die Dicke E der Trennwand (11) weniger als das 0,5-Fache des Außendurchmessers D des äußeren Rohrs beträgt und vorzugsweise weniger als das 0,2-Fache dieses Durchmessers beträgt.

4. Vorrichtung nach einem der vorherigen Ansprüche,
   **dadurch gekennzeichnet,**
   **dass** die Trennwand (11) fest mit dem inneren Rohr oder der Innenhülse verbunden wird, und zwar in einem Bereich (15) von dieser, der eine nach außen graduell verstärkte Dicke aufweist.

5. Vorrichtung nach einem der vorherigen Ansprüche,
   **dadurch gekennzeichnet,**

**dass** die Trennwand (11) fest mit mindestens einem der Rohre, dem inneren Rohr (2) oder dem äußere Rohr (3), oder mit der Innenhülse (14) oder der Außenhülse (12) durch Schweißen, Kleben oder Verschrauben fest verbunden ist.

6. Vorrichtung nach einem der vorherigen Ansprüche, **dadurch gekennzeichnet,**

**dass** die Trennwand (11) aus einem mechanisch widerstandsfähigen und kaum wärmeleitenden Werkstoff wie beispielsweise einem keramischen Werkstoff hergestellt ist.

## Claims

1. Device (10) with a radial partition (11) for a rigid double-walled pipe (1) or tube for transporting hydrocarbons, the said pipe consisting of two, respectively inner (2) and outer (3) coaxial metal tubes separated by an annular space (5), this pipe (1) being intended for very great depths, **characterized in that** it consists of a thick and rigid annular transverse partition (11) joining an outer metal sleeve (12) to an inner metal sleeve (14) of the same diameter as the said outer tube (3) and the said inner tube (2) respectively, these sleeves being designed to be welded to the inner tube (2) and to the outer tube (3) respectively, connection between the inner sleeve (14) and the outer sleeve (12) being provided by screwing (13).

2. Device according to Claim 1, **characterized in that** the inner sleeve (14) is offset axially with respect to the outer sleeve (12).

3. Device according to either of Claims 1 and 2, **characterized in that** the thickness E of the partition (11) is less than 0.5 times the outside diameter D of the outer tube and preferably less than 0.2 times this diameter.

4. Device according to any one of the preceding claims, **characterized in that** the partition (11) is fastened to the inner tube or to the inner sleeve in a region (15) of the latter having a thickness which gradually increases towards the outside.

5. Device according to any one of the preceding claims, **characterized in that** the partition (11) is fastened to at least one of the inner (2) or outer (3) tubes or to the inner (14) or outer (12) sleeves by welding, by adhesive bonding or by screwing.

6. Device according to any one of the preceding claims, **characterized in that** the partition (11) is made of a material which is mechanically strong and is a poor thermal conductor, such as a ceramic.

FIG.1

EP 1 165 997 B1

FIG.2

FIG.3

FIG.4

FIG_5

FIG_6